Europäisches Patentamt

European Patent Office

Office européen des brevets

(19)

(11) **EP 1 426 470 A1**

(12) **EUROPEAN PATENT APPLICATION**

(43) Date of publication:
**09.06.2004 Bulletin 2004/24**

(51) Int Cl.[7]: **D01F 11/14**

(21) Application number: **02292979.8**

(22) Date of filing: **03.12.2002**

(84) Designated Contracting States:
**AT BE BG CH CY CZ DE DK EE ES FI FR GB GR
IE IT LI LU MC NL PT SE SI SK TR**
Designated Extension States:
**AL LT LV MK RO**

(71) Applicants:
• **Motorola, Inc.
Schamburg, Illinois 60196 (US)**
• **COMMISSARIAT A L'ENERGIE ATOMIQUE
75752 Paris Cédex 15 (FR)**

(72) Inventors:
• **Goux Capes, Laurence
78000 Versailles (FR)**

• **Filoramo, Arianna
78470 Saint Remy les Chevreuse (FR)**
• **Bourgoin, Jean Philippe
78960 Voisin le Bretonneux (FR)**

(74) Representative: **Wharmby, Martin Angus
Motorola Centre de Recherche,
Parc Technologique de St. Aubin,
Route de L'Orme au Merisier,
Immeuble Columbia
91190 Gif-sur-Yvette (FR)**

(54) **Linkage of nanomorphic carbon to a nucleic acid**

(57) An exemplary method for substantially non-covalent linkage of nanomorphic carbon species (**200**) to a nucleic acid such as DNA (**120**) comprises *inter alia* the steps of providing a strand of nucleic acid (**120**), functionalizing the nucleic acid strand (**120**) with a first biomolecule (**110**), reacting the functionalized nucleic acid (**110, 120**) with a second biomolecule (**100**) and coupling a nanomorphic carbon species (**200**) to the nucleic acid complex (**100, 110, 120**). Disclosed features and specifications may be variously adapted or otherwise optionally modified to control or otherwise improve the deposition and/or orientation of nanomorphic carbon molecules with respect to any surface or substrate. An exemplary embodiment of the present invention representatively provides for non-covalent linkage of carbon nanotubes to DNA via a biotin-streptavidin complex.

EP 1 426 470 A1

## Description

### FIELD OF INVENTION

The present invention generally relates to methods for depositing and orienting nanomorphic carbon and especially, but not exclusively, carbon nanotubes. More particularly, the present invention involves non-covalent linkage of carbon nanotubes to a nucleic acid with the aid of biological molecules. The family of nucleic acids comprises Deoxyribonucleic acid (DNA), oligonucleotides, Ribonucleic acid (RNA) and synthetic structural homologues of DNA such as Peptide nucleic acids (PNA)

### BACKGROUND

CMOS technology has typically provided the basis for the majority of modern electronics fabrication techniques; however, CMOS is generally governed by Moore's Law. See, for example, G.E. Moore, IEEE Inter. Conv. Record. 44 (1995). Moore's Law generally predicts that CMOS-based processes will reach fundamental lithographically defined limits by about 2010 — concurrent with a dramatic increase in the cost of production. Accordingly, molecular electronics technologies are receiving increasing attention as alternative candidates to CMOS techniques.

Though the area of molecular electronics is generally still a new field, in terms of circuit implementations, various functional, molecular-based devices have been fabricated in the last few years that have raised the prospects for industrial applications in the near term. See, for example, C. Zhou, J. Kong and H. Dai, Appl. Phys. Lett. **76**, 1597 (2000); A. Bachtold *et al.*, Science **294**, 1317 (2001); M. Bockrath, J. Hone, A. Zettl, P.L. McEuen, A.G. Rinzler, R.E. Smalley, Phys. Rev. B **61**, R10606 (2000); V. Derycke, R. Martel, J. Appenzeller, and Ph. Avouris, Nanoletters **1**, 453 (2001); X. Liu, C. Lee, C. Zhou and J.Han App. Phys. Lett. **79**, 3329 (2001); H. C. Postma, T. Teepen, Z. Yao, M. Grifoni, C. Dekker, Science **293**, 76 (2001); J. B. Cui, M. Burghard, K. Kern, Nanoletters **2**, 117 (2002); C. Zhou, J. Kong, E. Yenilmez and H. Dai Science **290**, 1552 (2000); J. Kong, J. Cao, H. Dai and E. Anderson, App. Phys. Lett. **80**, 73 (2002).

Since the 1970's, graphitic nanotubes and fibrils have been identified as materials of interest for a variety of applications. Sub-micron graphite fibrils are sometimes called vapor grown carbon fibers (*e.g.*, carbon nanofibers (CNFs)). Carbon fibrils generally comprise vermiculitic carbon deposits having diameters on the order of about less than 1.0 µm and have typically been prepared through catalytic decomposition of various carbonasceous gases on, for example, metal surfaces. Such vermiculitic carbon deposits have generally been observed since the advent of electron microscopy. *See, for example*, Baker and Harris, "Chemistry and Physics of Carbon", **14**, 1978; and N. Rodriguez, *J. Material Research*, **8**, 1993.

In 1976, Endo *et al*. proposed a basic mechanism by which carbon fibrils are thought to grow. See, A. Obelin and M. J. Endo, "Of Crystal Growth", **32**, 1976. Carbon fibrils were generally first observed to originate from metal catalyst particles which, in the presence of a hydrocarbon gas, became supersaturated with carbon. A cylindrically-ordered graphitic core was extruded and subsequently coated with an outer layer of pyrolytically deposited graphite. These fibrils typically demonstrated diameters on the order of 0.1 µm, and more typically between 0.2 to 0.5 µm.

In 1983, Tennent succeeded in growing cylindrically-ordered graphite cores generally uncontaminated with pyrolytic carbon. See, *for example,* U.S. Pat. No. 4,663,230. Accordingly, Tennent generally provided access to smaller diameter fibrils, typically on the order of 35 to 700 Å (*e.g.*, 0.0035 to 0.070 µm), as well as an ordered "as-grown" graphitic surface. Fibrillar carbon species of somewhat irregular structure, but without pyrolytic carbon, have also been generally observed.

Carbon fibrils, carbon nanotubes (CNTs) and nanofibers are generally distinct from continuous carbon fibers otherwise commercially available as, for example, reinforcement materials. In contrast to fibrils which usually have large yet generally finite aspect ratios, continuous carbon fibers typically demonstrate aspect ratios on the order of about 1 E4 and often as much as 1 E6 or more. The diameter of continuous carbon fibers is also generally substantially larger than that of fibrils; usually greater than about 1.0 µm and more typically between 5 to 7 µm. Carbon nanotubes of a morphology similar to catalytically grown fibrils have been demonstrated to grow in a relatively high temperature carbon arc. *See, for example,* Iijima, *Nature*, 354, **56**, 1991. It is generally accepted that arc-grown nanofibers have morphology substantially similar to the earlier catalytically grown fibrils originally observed by Tennent. *See, for example*, Weaver, *Science,* 265, 1994.

Production methods for nanomorphic carbon species are now generally well established and typically allow for synthesis on a relatively large scale on the order of grams per day. For many potential applications of these materials, however, deposition and functionalization still remains a largely unresolved problem. Accordingly, a representative deficiency of the prior art involves the cost-effective and efficient deposition and orientation of nanomorphic carbon, for example carbon nanotubes, for molecular electronics applications.

### SUMMARY OF THE INVENTION

The present invention provides a method of non-covalently connecting nanomorphic carbon species to a nucleic acid, a method of depositing and/or orienting a plurality of carbon nanotubes with respect to a surface, and a material produced by a process including such methods, as described in the accompanying claims.

## BRIEF DESCRIPTION OF THE DRAWING

Representative elements, operational features, applications and/or advantages of the present invention reside *inter alia* in the details of construction and operation as more fully hereafter depicted, described and claimed — reference being made to the accompanying drawings forming a part hereof, wherein like numerals refer to like parts throughout. Other elements, operational features, applications and/or advantages will become apparent to skilled artisans in light of certain exemplary embodiments recited in the Detailed Description, wherein:

> FIG. **1** illustrates a representative first component process for the functionalization of DNA in accordance with one exemplary embodiment of the present invention;
> FIG. **2** illustrates a representative second component process for the substantially non-covalent linkage of nanomorphic carbon species to DNA in accordance with another exemplary embodiment of the present invention; and
> FIG. **3** depicts a representative molecular electronics circuit pathway that may be fashioned in accordance with various exemplary embodiments of the present invention.

Those skilled in the art will appreciate that elements in the Figures are illustrated for simplicity and clarity and have not necessarily been drawn to scale. For example, the dimensions of some of the elements in the Figures may be exaggerated relative to other elements to help improve understanding of various embodiments of the present invention. Furthermore, the terms 'first', 'second', and the like herein, if any, are used *inter alia* for distinguishing between similar elements and not necessarily for describing a sequential or chronological order. Moreover, the terms front, back, top, bottom, over, under, along and the like in the Description and/or in the Claims, if any, are generally employed for descriptive purposes and not necessarily for comprehensively describing exclusive relative position. Skilled artisans will therefore understand that any of the preceding terms so used may be interchanged under appropriate circumstances such that various embodiments of the invention described herein, for example, are capable of operation in other orientations than those explicitly illustrated or otherwise described.

## DETAILED DESCRIPTION OF EXEMPLARY EMBODIMENTS

The following descriptions are of exemplary embodiments of the invention and the inventors' conceptions of the best mode and are not intended to limit the scope, applicability or configuration of the invention in any way. Rather, the following description is intended to provide convenient illustrations for implementing various embodiments of the invention. As will become apparent, changes may be made in the function and/or arrangement of any of the elements described in the disclosed exemplary embodiments without departing from the spirit and scope of the invention.

The embodiments of the present invention described below provide a suitably adapted process component for the design of complex molecular architectures by *inter alia* permitting association of particular electronic properties of, for example, carbon nanotubes with unique intra- and intermolecular recognition properties of a nucleic acid. The process component provides a system and method for substantially non-covalent linkage of nanomorphic carbon species to a nucleic acid. In one exemplary embodiment, non-covalent linkage of carbon nanotubes to DNA comprises the steps of providing a strand of DNA, functionalizing the DNA strand with a first biomolecule, reacting the functionalized DNA with a second biomolecule (which is adapted to recognize and bind with the first molecule) and coupling a carbon nanotube to the DNA complex. In preferred embodiments of the method of the invention, the first and second biomolecules comprise a molecular receptor-ligand pair, preferably comprising digoxigenin-antidigoxigenin, especially where the second biomolecule is an at least partially hydrophobic moiety. An exemplary method representatively provides for non-covalent linkage of carbon nanotubes to DNA *via*, for example, a biotin-streptavidin complex.

One representative advantage of these embodiments of the present invention allows for the deposition and orientation of nanomorphic carbon species without requiring the need for covalent chemical functionalization with the attendant production of reaction intermediates. Another representative advantage concerns the use of DNA or other nucleic acid sequence recognition to manipulate the deposition and/or orientation of nanomorphic carbon species such as carbon nanotubes in the formation of a molecular electronics circuit pathway.

As used herein, the terms "carbon nanostructures", "carbon nanospecies", "carbon nanofibers", "carbon nanotubes" and any variations thereof, may generally be understood to comprise, for example, at least one of: carbon nanotubes; carbon nanofibers; carbon nanopolyhedra and such other nanomorphic forms of carbon now known or hereafter derived or otherwise described in the art.

A detailed description of an exemplary application, namely a method for substantially non-covalent linkage of carbon nanotubes to DNA *via* a biotin-streptavidin complex, is provided as a specific enabling disclosure that may be generalized by skilled artisans to any application of the disclosed method for nanomorphic carbon to DNA attachment in accordance with various embodiments of the present invention. Moreover, skilled artisans will appreciate that the principles of the present invention may be employed to ascertain and/or realize any number of other benefits associated with carbon nanomorph to DNA attachment such as, but not limited to: improvement of product yields; reduction of synthesis costs; improved process control and any other applications and/or benefits currently known or hereafter described in the art.

CARBON NANOTUBES

Carbon nanotubes are nanostructures with unique electronic and mechanical properties. Research interest initially focused on their exotic electronic properties, since nanotubes may be considered as prototypes for *inter alia* one-dimensional quantum wires. As other useful properties have been discovered (*e.g.*, tensile strength), interest has grown in potential applications. Carbon nanotubes may be used, for example, in nanoelectronics or to strengthen polymer materials.

An ideal nanotube may be thought of as a hexagonal network of carbon atoms that has been rolled up to make a generally seamless cylinder. Just a nanometer across, the cylinder may be tens of microns long with each end "capped" with half of a fullerene molecule. Single-wall nanotubes may be thought of as the fundamental cylindrical structure which form the building blocks of both multi-wall nanotubes and the ordered arrays of single-wall nanotubes called "ropes". Many theoretical studies have predicted the properties of single-wall nanotubes.

The first carbon filaments on the order of nanometer dimensions were prepared in the 1970's by Morinobu Endo, as part of his Ph.D. work at the University of Orleans in France. Endo grew carbon fibers about 7 nm in diameter using a vapor-growth technique, but these filaments were not generally recognized as nanotubes and were not studied systematically. It was not until 1991, when Sumio Iijima of the NEC Laboratory in Tsukuba used high-resolution transmission electron microscopy to observe carbon nanotubes, that research interest intensified. Researchers at the Institute of Chemical Physics in Moscow independently discovered carbon nanotubes and nanotube bundles at about the same time, but these generally had a much smaller length-to-diameter ratio. The shape of these nanotubes led the Russian researchers to call them "barrelenes".

The discovery of fullerenes by Harold Kroto of Sussex University in the UK and Richard Smalley and co-workers at Rice University in the US stimulated researchers to explore carbon filaments further. Indeed, the realization that the ends of carbon nanotubes must be fullerene-like 'caps' explained the observation that the diameter of a carbon nanotube was only as small as that of a fullerene molecule.

Although Iijima's first observations were of multi-wall nanotubes, he observed single-wall carbon nanotubes less than two years later, as did Donald Bethune and colleagues at IBM Almaden in California. In 1996 the Rice group, led by Smalley, synthesized bundles of aligned single-wall carbon nanotubes for the first time. These bundles contained many nanotubes with a narrow distribution of diameters, making it possible to perform experiments relevant to one-dimensional quantum physics. Several groups have now measured some of these remarkable properties, which seem to confirm many of the theoretical predictions.

A few studies have explored the structure of carbon nanotubes using high-resolution microscopy techniques. These experiments have generally confirmed that nanotubes are cylindrical structures based on the hexagonal lattice of carbon atoms that forms crystalline graphite. Three types of nanotubes are possible (armchair, zigzag and chiral nanotubes), depending on how the two-dimensional graphene sheet is 'rolled up'. The different types are most easily explained in terms of the unit cell of a carbon nanotube - in other words, the smallest group of atoms that defines its structure.

The so-called chiral vector of the nanotube $C_h$ is generally defined by $C_h = n\hat{a}_1 + m\hat{a}_2$ where $\hat{a}_1$ and $\hat{a}_2$ are unit vectors in the two-dimensional hexagonal lattice, and $n$ and $m$ are integers. Another useful parameter is the chiral angle, which is the angle between $C_h$ and $\hat{a}_1$.

When the graphene sheet is rolled up to form the cylindrical part of the nanotube, the ends of the chiral vector meet each other. The chiral vector thus forms the circumference of the nanotube's circular cross-section, and different values of $n$ and $m$ lead to different nanotube structures. Armchair nanotubes are formed when $n=m$ and the chiral angle is 30°. Zigzag nanotubes are formed when either $n$ or $m$ are zero and the chiral angle is 0°. All other nanotubes, with chiral angles intermediate between 0° and 30°, are known as chiral nanotubes. The properties of nanotubes are generally determined by their diameter and chiral angle.

Since each unit cell of a nanotube contains a number of hexagons, each of which contains two carbon atoms, the unit cell of a nanotube contains many carbon atoms. If the unit cell of a nanotube is $N$ times larger than that of a hexagon, the unit cell of the nanotube in reciprocal space is $\frac{1}{N}$ times smaller than that of a single hexagon.

Ordered nanotubes may be prepared by the laser vaporization of a carbon target in a furnace at about 1200°C. A cobalt-nickel catalyst helps the growth of the nanotubes, presumably because it prevents the ends from being 'capped' during synthesis, with about 70-90% of the carbon target may be converted to single-wall nanotubes. By using two laser pulses approximately 50 ns apart, growth conditions can be maintained over a larger volume and for a longer time. This scheme generally provides more uniform vaporization and better control of the growth conditions. Flowing argon gas sweeps the nanotubes from the furnace, for example, to a water-cooled copper collector just outside of the furnace.

Catherine Journet, Patrick Bernier and colleagues at the University of Montpellier in France later developed a carbon-arc method to grow similar arrays of single-wall nanotubes. In that procedure, ordered nanotubes are also produced from an ionized carbon plasma and joule heating from the discharge generated by the plasma. Several other groups are now making bundles of single-wall carbon nanotubes using variants of these methods.

In a scanning electron microscope, the nanotube material produced by either of these methods looks like a mat of carbon ropes. The ropes are between 10 and 20 nm across and up to 100 μm long. When examined in a transmission electron microscope, each rope is found to comprise a bundle of single-wall carbon nanotubes aligned along a substantially single direction. X-ray diffraction, which resolves many ropes at once, also shows that the diameters of the single-wall nanotubes have a generally narrow distribution with a relatively strong peak.

For the synthesis conditions used by the Rice and Montpellier groups, the diameter distribution resulted in a peak at about $1.38 \pm 0.02$ nm; very close to the diameter of an ideal (10, 10) nanotube. X-ray diffraction measurements by John Fischer and co-workers at the University of Pennsylvania showed that bundles of single-wall nanotubes may form a two-dimensional triangular lattice. The lattice constant is 1.7 nm and the tubes are separated by 0.315 nm at closest approach, which agrees with prior theoretical modeling by Jean-Christophe Charlier of the University of Louvain-la-Neuve in Belgium and co-workers.

While multi-wall carbon nanotubes do not generally require a catalyst for growth, single-wall nanotubes may typically only be grown with catalyst. However, the detailed mechanisms responsible for growth are not yet well understood. Experiments show that the width and peak of the diameter distribution depends on the composition of the catalyst, the growth temperature and various other growth conditions. Great efforts are now being made to produce narrower diameter distributions with different mean diameters and to gain better control of the growth process. From an applications point of view, the emphasis has generally been on methods that produce high yields of nanotubes at low cost.

The unique electronic properties of carbon nanotubes are generally believed to be due to the quantum confinement of electrons normal to the nanotube axis. In the radial direction, electrons are typically confined by the monolayer thickness of the graphene sheet. Around the circumference of the nanotube, periodic boundary conditions apply. For example, if a zigzag or armchair nanotube has 10 hexagons around its circumference, the 11th hexagonal will coincide with the first. Going around the cylinder once introduces a phase difference of $2\pi$.

Because of this quantum confinement, electrons may only generally propagate along the nanotube axis and so their wavevectors point in this direction. The resulting number of one-dimensional conduction and valence bands effectively depends on the standing waves that are set up around the circumference of the nanotube. These simple concepts may be employed *inter alia* to calculate the dispersion relations of the one-dimensional bands which generally link wavevector to energy from the well known dispersion relation in a graphene sheet.

Noriaki Hamada and colleagues, then at the NEC Laboratory in Tsukuba, calculated dispersion relations for small-diameter nanotubes which demonstrate that about one-third of small-diameter nanotubes are metallic, while the rest are semiconducting, depending on their diameter and chiral angle. In general, an $(n, m)$ carbon nanotube will be metallic when $n - m = 3q$, where $q$ is an integer. All armchair nanotubes are metallic, as are one-third of all possible zigzag nanotubes.

The density of electronic states as a function of energy has been calculated for a variety of nanotubes. As an example, consider the density of states for metallic (8, 8), (9, 9), (10, 10) and (11, 11) armchair nanotubes. While conventional metals have a smooth density of states, these nanotubes are characterized by a number of singularities, where each peak corresponds to a single quantum sub-band. These singularities are important when interpreting experimental results, such as measurements obtained from scanning tunneling spectroscopy and resonant Raman spectra.

Although the choice of n and m determines whether the nanotube is metallic or semiconducting, the chemical bonding between the carbon atoms is generally the same in both cases. This surprising result is due to the inherent electronic structure of a two-dimensional graphene sheet, which is a semiconductor with a zero band gap. In this case, the top of the valence band has the same energy as the bottom of the conduction band. This energy equals the Fermi energy for one wavevector, termed the K-point of the two-dimensional Brillouin zone (*i.e.*, the corner point of the hexagonal unit cell in reciprocal space). Theory demonstrates that a nanotube becomes metallic when one of the few allowed wavevectors in the circumferential direction passes through this K-point.

As the nanotube diameter increases, more wavevectors are allowed in the circumferential direction. Since the band gap in semiconducting nanotubes is inversely proportional to the tube diameter, the band gap approaches zero at large diameters, just as for a graphene sheet. At a nanotube diameter of about 3 nm, the band gap becomes comparable to thermal energies at room temperature.

Other calculations show that concentric pairs of metal-semiconductor and semiconductor-metal nanotubes are generally stable. Nanometer-scale devices may therefore be based on two concentric nanotubes or the junction between nanotubes. For example, a metallic inner tube surrounded by a larger semiconducting (or insulating) nanotube would form a shielded cable at the nanometer scale. One might then envision nanoscale electronic devices made completely from carbon that would combine the properties of metals and semiconductors, without the need for doping.

Early experiments on individual multi-wall nanotubes detected a variety of novel electrical properties, including two-dimensional quantum-interference effects due to weak localization and universal-conductance fluctuations. However, results from multi-wall nanotubes are complicated by simultaneous contributions from concentric nanotubes with different diameters and chiralities. In addition, defects in the nanotubes may lead to electron scattering with electrical contact not being made reliably to all of the constituent nanotubes. The conduction properties of the electrical contacts may also influence electron transport. Further experimental studies of these intriguing transport phenomena are currently be made on smaller diameter multi-wall nanotubes and at low temperatures, where one-dimensional quantum effects may generally be observed.

Olk and Heremans, with the General Motors Research Laboratory in Michigan, showed that the band gap for semiconducting nanotubes is inversely proportional to their diameter, in agreement with theoretical predictions. However, these techniques are most sensitive to the outer shell of a multi-wall nanotube, since the STM probes employed generally have a relatively short spatial range. Very recent STM experiments at the Delft University of Technology in the Netherlands have clearly shown the predicted one-dimensional density of states and the difference in behavior between metallic and semiconducting nanotubes.

Recently, electron transport in an individual single-wall carbon nanotube just a nanometer across was measured for the first time by Cees Dekker and colleagues at Delft, in collaboration with the Rice group. Another group, led by Paul McEuen at the University of California at Berkeley, working with the Rice group, has also made related measurements on a single rope of single-wall carbon nanotubes.

Both of these studies were carried out at temperatures below 1K and focused on the 'quantum dot' aspect of single-wall carbon nanotubes. Although nanotubes are very much longer than they are wide (typically by a factor of $10^4$), the finite length of the tubes still limits the number of allowed wavevectors along the nanotube axis. This gives rise to discrete energy states, which may be determined by measuring the conductance as a function of voltage. For a nanotube 3 μm long, the Delft group found that discrete states near the Fermi level are separated by about 0.6 meV. With the greater availability of single-wall nanotubes, researchers may expect that voltage-current characteristics will also be available for carbon nanotubes with known $n$ and $m$ values.

Since nanotubes are typically a few microns long, electrical contacts may be made by conventional lithographic techniques. Single-wall carbon nanotubes thus provide a unique system for studying single-molecule transistor effects, in which an electrode close to the nanotube may be used to modulate the conductance.

The energy needed to add an electron to a single-wall nanotube has also been measured. Some 2.6 meV is needed to overcome the Coulomb repulsion between electrons in a nanotube 3 μm long and about 1 nm in diameter. Researchers are now beginning to study these 'Coulomb-blockade' phenomena systematically in carbon nanotubes.

Recent progress in synthesizing carbon nanotubes should also stimulate experimental studies of the junction between metallic and semiconducting nanotubes, which may in turn encourage further discussions about possible electronic applications. Experimental studies on single-wall nanotubes would also test the recent predictions of Hiroshi Ajiki and Tsuneya Ando at the University of Tokyo, about what should happen to the dispersion relations in the presence of a magnetic field.

Some of the most interesting one-dimensional quantum effects of carbon nanotubes have been observed in Raman spectra, which probe the lattice vibrations, or 'phonons', in a material through the inelastic scattering of light. One-dimensional dispersion relations for the phonons in nanotubes have been calculated, first by Radi Jishi of the California State University at Los Angeles using the zone-folding method, and later by Ernst Richter and co-workers at the University of Kentucky using an *ab initio* modeling technique. These calculations show that there are many different vibrational modes, which result from the large number of carbon atoms in the unit cell of the nanotube. In general, more phonon modes appear as the nanotube diameter and the size of the unit cell increases.

Of these vibrational modes, only a few may be excited by Raman scattering. The number of these Raman-active modes is independent of the nanotube diameter, which makes it possible to investigate how the frequency and oscillator strength of each mode depends on the nanotube diameter. Some modes have been found to be highly sensitive to the nanotube diameter while others are not.

Raman-scattering experiments on ropes of single-wall carbon nanotubes grown by the Rice group, which contain a large concentration of (9, 9) and (10, 10) armchair nanotubes, have been performed. These experiments exploited the resonant Raman enhancement effect, in which the frequency of the laser light matches the energy of an allowed optical transition between peaks in the density of states. Such a resonance greatly increases the intensity of the observed Raman effect.

Bruce Chase, at the Dupont Research Facility in Wilmington, Delaware, measured Raman spectra at several different laser excitation energies. Since the energies of the electron states depend on the nanotube diameter, a change in laser frequency brings a carbon nanotube with a different diameter into resonance. Prominent in the spectra are a number of modes near a frequency of 1580 cm$^{-1}$, which show only a weak dependence on nanotube diameter. There is also a strong mode at about 186 cm$^{-1}$ that is highly sensitive to the nanotube diameter. This feature corresponds to a radial-breathing mode, in which all of the atoms in the nanotube are displaced outwards (or inwards) by an equal amount, so that the symmetry of the network of carbon atoms remains the same throughout the vibration. From the measured frequency of the radial-breathing mode, the diameter of the nanotube that is in resonance with the laser frequency may be determined.

Detecting such quantum effects in the Raman spectra lends strong credence to the idea that single-wall carbon nanotubes have a one-dimensional electronic and phonon structure. These experiments, together with very recent STM observations by Jeroen Wildöer and co-workers at Delft have provided the clearest confirmation to date that the electronic density of states have singularities typical of a one-dimensional system.

Another exciting area of research is focused on the mechanical properties of carbon nanotubes. By analogy to graphite and carbon fibers, nanotubes are expected to be very strong and have high elastic moduli. In 1996 a group led by Thomas Ebbeson at the NEC Research Institute in Princeton, New Jersey, estimated the Young's modulus of a carbon nanotube by measuring the vibrations of the free end of a nanotube that was clamped at the other end. Their estimates were consistent with the exceptionally high values of Young's modulus already measured for a graphene sheet - about 1 TPa.

Single-wall carbon nanotubes are also expected to be very strong and to resist fracture under extension, just as the carbon fibers commonly used in aerospace applications. According to calculations by Jerzy Bernholc and colleagues at North Carolina State University in Raleigh, a nanotube may be elongated by several per cent before it would fracture. Unlike carbon fibers, however, single-wall nanotubes are remarkably flexible. They may be twisted, flattened and bent into small circles or around sharp bends without breaking while severe distortions to the cross-section of nanotubes do not cause them to break. Moreover, molecular dynamics simulations by Bernholc and colleagues indicate that in many cases the nanotube should regain its original shape when the stresses distorting it are removed.

Another advantage of nanotubes is their behavior under compression. Unlike carbon fibers, which fracture easily under compression, carbon nanotubes form kink-like ridges that may relax elastically when the stress is released. As a result, nanotubes not only have the desirable properties of carbon fibers, but are also much more flexible and can be significantly compressed without fracture. Such excellent mechanical properties could lead to applications in their own right, or in conjunction with other desirable properties.

Richard Superfine and colleagues at the University of North Carolina in Chapel Hill have shown that the mechanical properties of carbon nanotubes would make them ideal for manipulating other nanoscale structures. Advances in understanding carbon nanotubes should therefore have a major impact on the whole field of nanotechnology. Many of the applications now being considered involve multi-wall nanotubes, partly because they have been available for much longer, and partly because many of these applications do not explicitly depend on the one-dimensional quantum effects found mainly in single-wall nanotubes.

It has also been suggested that carbon nanotubes may be used in displays or for the tips of electron probes. Pulickel Ajayan and co-workers at Rensselaer Polytechnical Institute in Troy, New York, have shown that the caps of nanotubes are more chemically reactive than the cylindrical sections and a group at the Ecole Polytechnique Fédérale Lausanne in Switzerland, then led by Walter ter Heer, has shown that the caps are efficient electron emitters. Other applications could result from the observation that carbon nanotubes can retain relatively high gas pressures within their hollow cores. Charles Lieber of Harvard University has also suggested that carbon nanotubes may act as a template for synthesizing new carbides structured on the nanoscale.

For a more comprehensive discussion of carbon nanotubes, see, for example: M. S. Dresselhaus, G. Dresselhaus and P. C. Eklund, Science of Fullerenes and Carbon Nanotubes (Academic Press, New York, 1996); T. Ebbesen, Carbon Nanotubes: Preparation and Properties (CRC Press, Boca Raton, Florida, 1997); and M. Endo, Special issue Carbon **33** (1997).

## NON-COVALENT ATTACHMENT OF CARBON NANOTUBES TO A NUCLEIC ACID SUCH AS DNA

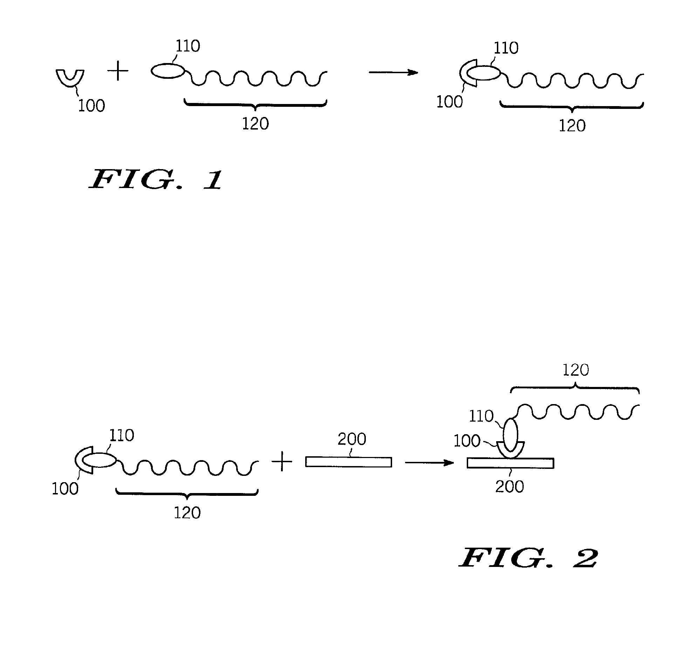

An exemplary method for substantially non-covalent linkage of carbon nanotubes to DNA is representatively illustrated in Figures **1** and **2**. The illustrated process comprises *inter alia* the steps of providing a strand of DNA **120** which is then functionalized with a first biomolecule **110** — in one particular embodiment, said first biomolecule comprises biotin **110**. The biotin-DNA complex (**110, 120**) is subsequently reacted with a second biomolecule **100** — in this particular embodiment, said second biomolecule comprises streptavidin **100**. Thereafter, the streptavidin-biotin-DNA complex (**100, 110, 120**) is reacted with at least one carbon nanotube **200** to substantially tether, couple or otherwise form an attachment between the streptavidin-biotin-DNA complex (**100, 110, 120**) and the carbon nanotube **200**.

The position of functionalization by the biomolecule on the nucleic acid, in this case DNA, is chosen in accordance with the nature of the attachment that is desired and, in particular, the desired position of the coupling of the nanomorphic carbon species to said DNA complex. The functionalization of the nucleic acid strand may be chosen to occur at a terminal portion of the nucleic acid strand and/or at one or more intermediate portions of said nucleic acid strand. The coupling of the nanomorphic carbon species to the nucleic acid strand may occur at a location substantially along the sidewall of the nanomorphic carbon species.

More generally, however, various other exemplary embodiments of the present invention provide systems and methods to permit linkage of chemically inert nanomorphic carbon species to DNA material or other nucleic acids. This linkage is generally non-covalent so that, in the case of carbon nanotubes, the CNT sidewalls maintain their original $sp_2$ molecular orbital hybridization. The linkage of the nanomorphic carbon to DNA may alternatively be accomplished with any biomolecular receptor-ligand pair. Here, the use of biotin and streptavidin has been disclosed; however, skilled artisans will appreciation than any biomolecular receptor-ligand pair, such as, for example, digoxigenin-antidigoxigenin and the like, may be employed to produce substantially the same results.

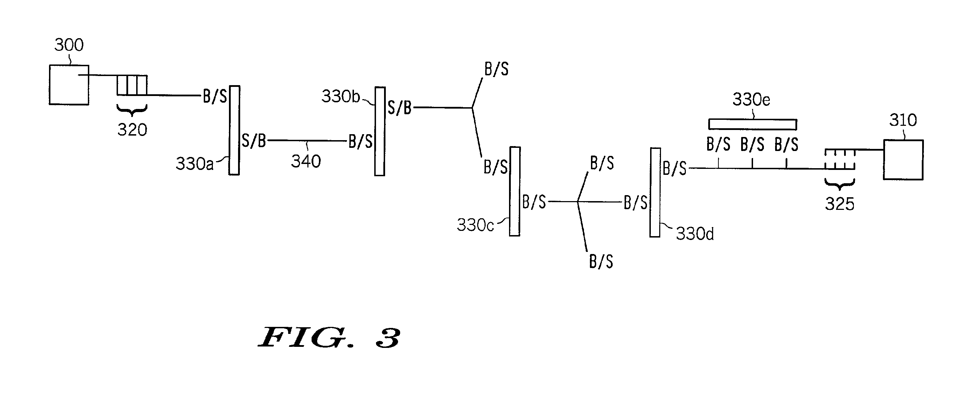

The invention proposed is a promising building block for the design of complex molecular architectures, such as that representatively depicted, for example, in Figure **3**, since it permits utilization of the unique electronic properties of carbon nanotubes with the specificity of the intra- and inter-molecular recognition properties of DNA.

Figure 3 shows one element of a full array. The element comprises microelectrodes 300 and 310 that are metal layers deposited on a support surface. The microelectrodes are functionalized by DNA single strands, for example by covalent bonds, and coupled with CNTs 330a and 330e by links 320 and 325 between the DNA strands coupled to the CNTs and the complementary DNA strands bonded to the microelectrodes 300 and 310. The rest of Fig. 3 represents different possibilities for forming the network of CNTs, using different DNA couplings. Thus, the CNT 330a may be linked to the CNT 330b by a DNA strand 340 that is functionalized at both ends by streptavidin-biotin complexes. The CNT 330b may be linked to the CNT 330c by DNA strands forming a three-branch DNA junction that is functionalized at two of its three ends by streptavidin-biotin complexes, leaving the third branch end for linking to other parts of the network. Similarly, the CNT 330c may be linked to the CNT 330d by DNA strands forming a four-branch DNA junction that is functionalized at two of its four ends by streptavidin-biotin complexes, leaving two other branch ends for linking to other parts of the network. The CNT 330d may be linked to the CNT 330e by a DNA strand that is functionalized at one end and at intermediate portions by streptavidin-biotin complexes, offering different possibilities for relative orientation of the CNTs.

In one embodiment of the present invention, an excess of streptavidin in an aqueous solution was added to biotinylated DNA (prepared by appropriate polymerase chain reaction) in water. The system was incubated one hour at room temperature to obtain the streptavidin-biotin complex. Purified single-wall carbon nanotubes were then dispersed in water by overnight sonication.

Filtration was carried out to remove insoluble particles from the dispersion. The streptavidin/biotin DNA complex was added to the solution of single wall carbon nanotubes and incubated two hours at room temperature. The system was then diluted in suitably adapted biological buffer and kept at 4°C before use.

In another exemplary embodiment, in accordance with the present invention, a 10 kb Biot-DNA was prepared with an expanded long template PCR system. 5 $\mu$l of a 6 nM aqueous solution of 10 kb Biot-DNA was incubated with 1 $\mu$l of a 2 10-8 M streptavidin solution for one hour at room temperature. This preparation was then added to 20$\mu$l of a 0.1mg/ml suspension of CNTs in water. The system was thereafter incubated an additional two hours at room temperature. Afterwards, 80 $\mu$l of biological buffer (Tris, pH = 8, 10 mM NaCl) was added and the resulting product stored at 4° C. To characterize DNA-CNT coupling, the reaction product was deposited on an APTS layer (amino-propyltrietoxysilane) and then imaged by AFM.

Various exemplary embodiment of the invention provide for the linkage of CNTs to DNA strands as well as, by virtue of the sequencing recognition of DNA, the definition of topological information and/or coding layouts of, for example, a circuit based on CNT devices. Accordingly, various representative aspects of the present invention provide means for the formation of nanotubes arrays based on DNA templates. Then, certain DNA strands linked to CNTs may be left with free portions, typically end portions, enabling coupling with complementary DNAstrands attached on the surface of a microelectrode array. Once The DNA/CNT network is immobilized with respect to the microelectrodes, metallization of DNA can be performed to electrically contact the CNTs to the microelectrodes. Furthermore, experimental results demonstrate a sequence-dependent, space-resolved metallization of DNA. These achievements coupled with various exemplary embodiments, in accordance with the present invention, provide novel ways to custom tailor the electrical function of circuits by the sequence of the DNA used.

In the foregoing specification, the invention has been illustrated with reference to specific exemplary embodiments; however, it will be appreciated that various modifications and changes may be made without departing from the scope of the present invention as set forth in the claims below. The specification is to be regarded in a representative manner, rather than a restrictive one and all such modifications are intended to be included within the scope of the present invention. Accordingly, the scope of the invention should be determined by the claims appended hereto and their legal equivalents rather than by merely the examples described above. For example, the steps recited in any method or process claims may be executed in any order to produce substantially the same result as the present invention and are accordingly not limited to the specific configuration recited in the claims.

Benefits, other advantages and solutions to problems have been described above with regard to a particular embodiment; however, any benefit, advantage, solution to problems or any element that may cause any particular benefit, advantage or solution to occur or to become more pronounced are not to be construed as critical, required or essential features or components of any or all the claims. As used herein, the terms "comprises", "comprising", or any variation thereof, are intended to reference a non-exclusive inclusion, such that a process, method, article, composition or apparatus that comprises a list of elements does not include only those elements recited, but may also include other elements not expressly listed or inherent to such process, method, article, composition or apparatus. Other combinations and/or modifications of the above-described structures, arrangements, applications, proportions, elements, materials or components used in the practice of the present invention, in addition to those not specifically recited, may be varied or otherwise particularly adapted by those skilled in the art to specific environments, manufacturing specifications, design parameters or other operating requirements without departing from the general principles of the same.

**Claims**

1.  A method for non-covalently connecting nanomorphic carbon species to a nucleic acid, said method comprising the steps of:

    providing a strand of said nucleic acid;
    functionalizing said nucleic acid strand with a first biomolecule;
    reacting said functionalized nucleic acid with a second biomolecule to form a nucleic acid complex;
    coupling said nanomorphic carbon species to said nucleic acid complex.

2.  A method as claimed in claim 1, wherein said nucleic acid is DNA.

3.  A method as claimed in claim 1 or 2, wherein said first biomolecule and said second biomolecule comprise a molecular receptor-ligand pair.

4.  A method as claimed in claim 3, wherein said molecular receptor-ligand pair comprises digoxigenin-antidigoxigenin.

5.  A method as claimed in any preceding claim, wherein said first biomolecule comprises biotin, said second biomolecule comprises streptavidin and said nanomorphic carbon species comprises a carbon nanotube.

6.  A method as claimed in any preceding claim, wherein said second biomolecule comprises an at least partially hydrophobic moiety.

7.  A method as claimed in any preceding claim, wherein said functionalization of said nucleic acid strand occurs at a substantially terminal portion of said nucleic acid strand.

8.  A method as claimed in any preceding claim, wherein said functionalization of said nucleic acid strand occurs at at least one intermediate portion of said nucleic acid strand.

9.  A method as claimed in any preceding claim, wherein said coupling of said nanomorphic carbon species to said nucleic acid strand occurs at a location substantially along the sidewall of said nanomorphic carbon species.

10. A material produced by a process including non-covalently connecting said nanomorphic carbon species to a nucleic acid by a method as claimed in any preceding claim.

11. A process for producing a material comprising depositing and/or orienting a plurality of carbon nanotubes with respect to a surface, said method comprising the steps of:

    providing said plurality of carbon nanotubes;
    providing at least a plurality of DNA strands;
    functionalizing said DNA strands with at least a plurality of first biomolecules; reacting said functionalized DNA with at least a plurality of second biomolecules to form a plurality of DNA complexes;
    coupling said carbon nanotubes to said DNA complexes.

12. A process as claimed in claim 11, further comprising the step of using the sequence recognition properties of said DNA to selectively deposit said carbon nanotubes with respect to said surface.

13. A process as claimed in claim 11 or 12, further comprising the step of using the sequence recognition properties of said DNA to selectively orient said carbon nanotubes with respect to said surface.

**14.** A process as claimed in any of claims 11 to 13, further comprising the step of using the sequence recognition properties of said DNA to build a molecular circuit pathway comprising said carbon nanotubes.

**15.** A process as claimed in any of claims 11 to 14, further comprising the step of selectively metallizing said DNA to form electrical contacts.

**16.** A material comprising nanomorphic carbon deposited and/or oriented by a process including non-covalently connecting said nanomorphic carbon species to a nucleic acid by a method as claimed in any preceding claim.

**FIG. 1**

**FIG. 2**

*FIG. 3*

**European Patent Office**

## EUROPEAN SEARCH REPORT

Application Number

EP 02 29 2979

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | BALAVOINE F ET AL: "Helical Crystallization of Proteins on Carbon Nanotubes: A First Step towards the Development of New Biosensors" ANGEW. CHEM. INT. ED., vol. 38, no. 13/14, 1999, pages 1912-1915, XP002241115 * the whole document * --- | 1-16 | D01F11/14 |
| A | DWYER C ET AL: "DNA-functionalized single-walled carbon nanotubes" NANOTECHNOLOGY, no. 13, 6 September 2002 (2002-09-06), pages 601-604, XP002241116 * the whole document * --- | 1-16 | |
| A | GUO Z ET AL: "Immobilization and Visualization of DNA and Proteins on Carbon Nanotubes" ADVANCED MATERIALS, vol. 10, no. 9, 1998, pages 701-703, XP002241117 * the whole document * --- | 1-16 | |
| A | WO 01 66687 A (BELOSLUDTSEV INNA Y ;BELOSLUDTSEV YURI Y (US); HOGAN MICHAEL (US);) 13 September 2001 (2001-09-13) * the whole document * --- | 1-16 | **TECHNICAL FIELDS SEARCHED (Int.Cl.7)** D01F |
| A | WO 02 095099 A (CHEN ROBERT J ;DAI HONGJIE (US); UNIV STANFORD (US)) 28 November 2002 (2002-11-28) * the whole document * ----- | 1-16 | |

The present search report has been drawn up for all claims

| Place of search | Date of completion of the search | Examiner |
|---|---|---|
| THE HAGUE | 14 May 2003 | Tarrida Torrell, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 02 29 2979

This annex lists the patent family members relating to the patent documents cited in the above-mentioned European search report.
The members are as contained in the European Patent Office EDP file on
The European Patent Office is in no way liable for these particulars which are merely given for the purpose of information.

14-05-2003

| Patent document cited in search report | | Publication date | Patent family member(s) | | Publication date |
|---|---|---|---|---|---|
| WO 0166687 | A | 13-09-2001 | AU<br>WO | 6939300 A<br>0166687 A1 | 17-09-2001<br>13-09-2001 |
| WO 02095099 | A | 28-11-2002 | WO | 02095099 A1 | 28-11-2002 |

EPO FORM P0459

For more details about this annex : see Official Journal of the European Patent Office, No. 12/82